# FASCICULE DE BREVET EUROPEEN

(11) **EP 0 344 141 B1**
(45) Date de publication et mention de la délivrance du brevet: **02.11.1994**
(21) Numéro de dépôt: 89870063.8
(22) Date de dépôt: 08.05.1989
(51) Int. Cl.: C08L 95/00, E01C 7/26, E01C 19/10

(54) **Utilisation d'une composition bitumineuse perméable à structure ouverte pour travaux hydrauliques**
Verwendung einer durchlässigen bituminösen Zusammensetzung mit einer offenen Struktur im Wasserbau
Use of a pervious bituminous composition with an open structure in hydraulic engineering

(30) Priorité: 19.05.1988 BE 8800557
(43) Date de publication de la demande: 29.11.1989
(73) Titulaire: Bitumar, naamloze vennootschap, B-2730 Zwijndrecht (BE)
(72) Inventeur: Paynjon, Roger, B-2210 Borsbeek (BE); Elskens Frank, 2850 Keerbergen (BE); Eeckelaert Frank, 9219 Gentbrugge (BE)
(74) Mandataire: Pieraerts, Jacques

(56) Documents cités:
- BE-A- 743 126
- DE-A- 3 104 714
- FR-A- 2 044 338
- Lexikon der Bautechnik, tome 10, Deutsche Verlagsanstalt, Stuttgart 1966, page 76
- Encyclopédie Pratique de la Construction et du Bâtiment, tome III, Librairie A. Quillet, Paris 1968, pages 310 et 315
- W. Scholz, Baustoffkenntnis, 10ième ed., Werner-Verlag, 1989, page 543

## Description

La présente invention se rapporte à une utilisation d'une composition bitumineuse perméable à structure ouverte pour travaux hydrauliques.

L'asphalte à gravillon ouvert, un mélange de gravillon et de mastic d'asphalte (du sable naturel, du filler très faible et des bitumes), démontre depuis longtemps déjà, ses qualités en diverses applications hydrauliques. Par structure ouverte, on entend une composition bitumineuse qui reste perméable après le refroidissement et le durcissement des bitumes étant donné les espaces qui continuent a assurer un passage entre les pierres enrobées dans du mastic d'asphalte, tant pour l'eau que pour l'air. De telles structures bitumineuses sont, à maints égards, préférables aux structures compactées et denses et elles trouvent dès lors toujours davantage leur application dans des ouvrages hydrauliques, tels que des brise-lames, des cuvelages de digues, des protections de sols, etc. Grâce à la structure ouverte d'une telle composition bitumineuse, le poids de l'eau sur la couche bitumineuse n'a pas d' incidence pour des ouvrages hydrauliques. D'un point de vue écologique, une composition bitumineuse perméable mérite également un très grand intérêt car on a constaté que les cuvelages de digues à base de bitume à structure ouverte favorisent la croissance spontanée d'un grand nombre de végétaux.

L'expérience a cependant appris que, afin de pouvoir garantir la solidité des structures, beaucoup d'attention doit être apportée à la qualité du produit fourni lui-même pendant la production et le traitement de l'asphalte à gravillon ouvert. Ce contrôle de la qualité se rapporte surtout au fait d'avoir la composition souhaitée, tant du mastic que du mélange entier. La composition des mélanges produits est soumise, en effet, à des variations par suite de la manière dont le produit est fourni par les installations de traitement de l'asphalte.

Par des écarts dans la composition, la viscosité du mastic, déterminée avec précision au laboratoire, va également fluctuer. A cela s'ajoute encore l'effet de la température de mélange qui est également soumise à des variations pendant le processus de production (généralement entre 120 et 160 %).

On peut atteindre ainsi pratiquement des viscosités qui varient entre 30 et 80 Pa.s, pour un mastic qui est composé sur base d'une viscosité de 55 Pa.s., à 140°C.

Une température de mélange élevée, une teneur trop éleveé en bitume et/ou un rapport sable/filler peuvent être à l'origine de la formation d'un mastic peu visqueux, d'où les problèmes cités ci-après peuvent se produire pendant la mise en oeuvre du matériaú chaud :
- descente du mastic à travers le squelette pierreux dans le camion au cours du transport. On obtient alors un mélange hétérogène qui doit de nouveau être mélangé sur le chantier, si c'est encore possible,
- affaissement du mastic vers le soi après que l'asphalte à gravillon ouvert est appliqué, de sorte qu'on obtient une structure dense non désirée,
- l'asphalte à gravillon ouvert ne se maintient pas à l'inclinaison désirée, ce qui provoque localement des glissements dans le revêtement, surtout pour des talus plus raides.

Par suite de la possibilité de variations dans la composition et de la température de mélange, et donc également de la viscosité du mastic, un contrôle à la production intense est requis afin de minimaliser ou d'empêcher des problèmes de transport et de mise en oeuvre, tels que décrits ci-dessus. Pour cette raison, l'application d'asphalte à gravillon ouvert reste limitée généralement à une pente de talus déterminée. Une telle pente de talus appropriée pour un tel asphalte à gravillon ouvert n'est généralement pas plus raide que 6/4. On peut donc admettre que le mastic, le constituant le plus important de l'asphalte à gravillon ouvert, est très sensible à des irrégularités au cours de la production ce qui peut compliquer la mise en oeuvre et la qualité finale du produit peut baisser, et être souvent totalement absente.

Afin de réaliser les objectifs selon l'invention, la composition bitumineuse est une composition perméable à structure ouverte à base de gravillon calibré enrobé dans un mastic d'asphalte constitué à base de
45 - 70 % en poids de sable sec
15 - 30 % en poids de filler faible
12 - 25 % en poids de bitume et
0.1-0.7 % en poids de fibres de cellulose du poid total du mastic d'asphalte et obtenue grâce à un procédé de fabrication qui consiste dans une première phase à mélanger ensemble du sable sec, du filler faible et des fibres de cellulose, dans une deuxième phase à convertir ces agrégats en un mastic d'asphalte par addition de bitume liquide chaud et, dans une troisième phase à mélanger ce mastic d'asphalte à du gravillon calibré.

Suivant une forme de réalisation de l'invention appliquée de préférence, on utilise, au moins en partie, du bitume de Trinidad.

Il est caractéristique, pour l'invention, de procéder en trois phases, notamment une première phase où le sable, le filler, et les fibres sont mélangés entre eux à sec. La deuxième phase englobe l'injection des bitumes et le mélange en un mastic du sable, du filler, des fibres et des bitumes. Dans la troisième phase, le mastic obtenu après les deux premières phases est rajouté au gravillon calibré.

Le temps de mélange dans la première phase comporte environ 20 secondes; la deuxième phase comporte approximativement 35 secondes et la troisième phase 40 secondes. Le temps de mélange total peut donc être évalué à approximativement 95 secondes.

Le but de l'addition de fibres de cellulose comme matière d'appoint dans le mastic est très clair; la sensibilité de la viscosité du mastic est à réduire pendant la production, surtout pour les faibles valeurs, de façon qu'on obtienne un produit amélioré qualitativement. La probabilité d'affaissements, entr'autres pendant le transport et la mise en oeuvre, diminue considérablement. Les possibilités d'application sont élargies du fait qu'entr'autres des talus plus raides, jusqu'à des pentes 4/4, peuvent être envisagés.

Les fibres de cellulose intégrées dans le mastic d'asphalte sont, par exemple, les fibres de cellulose connues dans le commerce sous la marque Technocell 1004. Dans les deux exemples de réalisation cités ci-après, on entend par fibres de cellulose des fibres qui sont commercialisées sous ledit nom commercial.

### Exemple 1

Un mastic d'asphalte a été fabriqué à une température de 150°C, constitué par 18 % de bitume 80/100, 24,3 % de filler très faible, 57,3 % de sable naturel et 0,4 % de fibres de cellulose. Le sable, le filler et les fibres ont été mélangés à sec (temps de mélange : 20 secondes). Ces agrégats mêlés à sec ont ensuite été liés en mastic au moyen de bitume (temps de mélange : 35 secondes). Dans la phase de mélange suivante, l'asphalte à gravillon ouvert et fibreux a été obtenu par addition et mélange de calcaire 20/40 mm au mastic d'asphalte dans un rapport de 80/20 % à une température d'environ 140°C (temps de mélange : 40 secondes). Ce mélange a été transporté vers le lieu de mise en oeuvre, a savoir un talus 4/4 appartenant à une berge de canal. Le mélange a été étalé sur le talus du sol sur lequel un textile artificiel (dit géotextile) était placé. La température de la composition bitumineuse étalée sur place s'élevait à 135°C. La couche avait une épaisseur de 12 cm.

Les constatations suivantes ont été faites ensuite sur place :
- aucun affaissement du mastic d'asphalte à travers le squelette calcaire pendant le transport n'a été constaté. L'homogénéité du mélange était donc conservée;
- aucun affaissement du mastic d'asphalte à travers le squelette calcaire pendant la pose sur la pente ou pendant la phase de refroidissement qui la suivait. La structure ouverte désirée restait donc maintenue;
- pas de déformations du mélange sur un talus raide (4/4). Ces déformations étaient donc absentes, tant à l'état chaud (glissements localisés de la plaque d'asphalte placée) qu'à l'état refroidi (écoulement par suite d'une rupture d'équilibre de stabilité interne);
- on a également constaté que le mastic d'asphalte est moins sensible à la température par l'addition de fibres (trop chaud, ce qui correspond à une viscosité insuffisante entraînant affaissements et déformations). Le mastic d'asphalte apparaissait également moins sensible aux changements des rapports bitume/sable/filler. On entend par là que la viscosité du mélange peut devenir trop faible avec les conséquences néfastes connues.

### Exemple 2

Un mastic d'asphalte constitué à base d'un agent de liaison bitumineux, de sable naturel, de filler très faible et d'une matière d'appoint à fibres de cellulose a été fabriqué à une température de 150°C.

Les rapports s'établissaient ainsi :

| | |
|---|---|
| Agent de liaison bitumineux | 19 % |
| Sable naturel | 57 % |
| Filler faible | 23,6 % |
| Fibres de cellulose | 0,4 % |

Le sable, le filler et les fibres ont d'abord été mêlés à sec (temps de mélange : 20 secondes) et l'agent de liaison ensuite rajouté (temps de mélange : 35 secondes).

La quantité d'agent de liaison rajoutée était composée de bitumes de pétrole doux et de bitume de la Trinité dans la proportion 80/20 %. Dans la phase de mélange suivante, l'asphalte à gravillon ouvert modifié et fibreux a été fabriqué par addition et mélange de calcaire 16/22 mm au mastic d'asphalte dans la proportion 78,5/21,5 %. Le temps de mélange, lors de cette dernière phase, était de 40 secondes.

On a constaté ce qui suit :
- à côté des avantages qui ont été mentionnés dans le cadre de l'Exemple 1, les avantages supplémentaires ci-après peuvent être cités :
- diminution de la sensibilité au vieillissement de l'agent de liaison bitumineux;
- possibilité d'addition de davantage d'agent de liaison sans conséquences néfastes, telles que, par exemple, affaissement ou écoulement ou déformation de la composition. Par l'addition de davantage d'agent de liaison, un effet de stripage moins important a été constaté entraînant une résistance à la fatigue accrue et une augmentation de la résistance contre les dégâts provoqués par le gel. En outre, la stabilité interne augmente et on obtient une résistance à la déformation accrue contre des charges mécaniques externes.

On trouvera encore, ci-après, des essais comparatifs entre la composition bitumineuse fibreuse suivant l'invention, appelée ci-après "asphalte à gravillon fibreux", et l'asphalte à gravillon ouvert normal.

L'asphalte à gravillon ouvert normal contient 80 % de calcaire 20/32 mm et 20 % de mastic.

L'asphalte à gravillon fibreux contient 80 % de calcaire 20/32 mm et 20 % de mastic avec 0,3 %, 0,4 % ou 0,5 % de fibres.

Les essais comparatifs effectués ont pour but de pouvoir observer les effets de l'addition de fibres de cellulose à l'asphalte à gravillon ouvert normal et de pouvoir formuler d'éventuelles conclusions quant à l'amélioration du nouveau mélange.

Au cours d'un essai comparatif visuel sur le chantier de production, on a pu constater que l'asphalte à gravillon ouvert produit au moyen de mastic de cellulose était mélangé de manière homogène, tant pour une température de mélange de 120 que de 150°C. L'enrobage était convenable bien qu'un aspect du mastic plus mat et floconneux ait pu être observé. La pose sur un talus 4/4 n'a pas occasionné de problèmes et on n'a pas constaté d'affaissements.

On a également effectué des expériences en laboratoire. L'expérience de la pente (mesure de la stabilité interne), a été effectuée en utilisant des bacs en bois remplis de matériau. Ces bacs ont été placés suivant une inclinaison 4/4 et ouverts dans le bas, après refroidissement des mélanges, de sorte qu'on a pu vérifier la stabilité dans le temps des mélanges à température ambiante.

On a utilisé deux mélanges lors de cette expérience comparative, notamment le mélange M1, à savoir un mélange contenant 0 % de fibres de cellulose et un mélange M3 contenant 0,4 % de fibres de cellulose.

Pendant la durée de l'expérience, on a régulièrement mesure le glissement de la surface supérieure par rapport à des références fixes.

| Temps | Glissement | |
|---|---|---|
| | M1 | M3 |
| 9 jours | 0,8 mm | 0,0 mm |
| 13 jours | 1,2 mm | 0,4 mm |
| 24 jours | 2,1 mm | 0,6 mm |
| 58 jours | 2,7 mm | 1,1 mm |

La composition M3 est donc nettement plus stable que la composition M1 sans fibres.

On a également effectué diverses expériences, telles que l' expérience Marshall et l'expérience de fluage, sur deux mélanges, notamment un mélange F sans bitume de la Trinité et un mélange T avec substitution de 8 % de bitume de pétrole par du bitume de Trinidad. Une nette augmentation de la stabilité a eu lieu par l'addition de bitume de Trinidad ainsi qu'une augmentation de la résistance à la déformation (respectivement des augmentations d'environ 35 % et d'environ 20 %).

Le procédé de composition d'une composition bitumineuse perméable suivant l'invention et la composition obtenue suivant ce procédé démontrent que la présence de fibres, qui sont préalablement mêlées à sec à du sable fin, des fillers faibles et du bitume pour la formation d'un mastic d'asphalte, tant pendant le transport que lors de la mise en oeuvre sur place, garantit le squelette pierreux désiré.

## Revendications

1. Utilisation d'une composition bitumineuse pour travaux hydrauliques caractérisée en ce que la composition bitumineuse est une composition perméable à structure ouverte à base de gravillon calibré enrobé dans un mastic d'asphalte constitué à base de
45 - 70 % en poids de sable sec
15 - 30 % en poids de filler faible
12 - 25 % en poids de bitume et
0.1-0.7 % en poids de fibres de cellulose du poids total du mastic d'asphalte et obtenue grâce à un procédé de fabrication qui consiste dans une première phase à mélanger ensemble du sable sec, du filler faible et des fibres de cellulose, dans une deuxième phase à convertir ces agrégats en un mastic d'asphalte par addition de bitume liquide chaud et, dans une troisième phase à mélanger ce mastic d'asphalte à du gravillon calibré.

2. Utilisation d'une composition bitumineuse, telle que définie par la revendication 1 caractérisée en ce qu'il est fait usage d'un bitume qui est, en partie, au moins du bitume de Trinidad.

## Claims

1. The use of a bituminous composition for hydraulic work characterised in that the bituminous composition is a permeable open structure based on graded gravel coated in a asphalt mastic, the mastic comprising between 45 and 70% by weight of dry sand, between 15 and 30% by weight of soft filler, between 12 and 25% by weight of bitumen and between 0.1 and 0.7% by weight of cellulose fibres (as a percentage of the total weight of asphalt mastic) and obtained freely from a manufacturing process which comprises a first phase of mixing together of the dry sand, the soft filler and the cellulose fibres, and a second phase of converting these into aggregate in an asphalt mastic by addition of hot liquid bitumen and, in a third phase by mixing the mastic asphalt with some graded gravel.

2. The use of a bituminous composition as claimed in Claim 1, characterised in that the bitumen is at least partially bitumen of Trinidad.

## Patentansprüche

1. Verwendung einer bituminösen Zusammensetzung für hydraulische Arbeiten,
dadurch **gekennzeichnet**,
daß die bituminöse Zusammensetzung eine durchlässige Zusammensetzung ist, mit geöffneter Struktur, auf der Basis von kalibriertem Splitt, eingehüllt in einen Asphaltmastix, gebildet auf der Basis von
45 - 70 Gewichtsprozent trockenem Sand
15 - 30 Gewichtsprozent schwachem bzw. dünnem Füller
12 - 25 Gewichtsprozent Bitumen und
0.1-0.7 Gewichtsprozent Zellulosefasern mit dem Gesamtgewicht des Asphaltmastixs und hergestellt durch ein Fabrikationsverfahren, das in einer ersten Phase darin besteht, das den trockenen Sand, den schwachen Füller und die Zellulosefasern umfassende Ganze zu mischen, in einer zweiten Phase diese Zuschlagstoffe in einen Asphaltmastix zu überführen durch Zusatz von flüseigem, warmem Bitumen und, in einer dritten Phase, diesen Asphaltmastix mit kalibriertem Splitt zu mischen.

2. Verwendung einer bituminösen Zusammensetzung, wie durch Anspruch 1 definiert, dadurch gekennzeichnet, daß ein Bitumen verwendet wird, das wenigstens zum Teil eine Trinidad-Bitumen ist.
